(19) **Europäisches Patentamt / European Patent Office / Office européen des brevets**

(11) **EP 4 528 875 A1**

(12) **EUROPEAN PATENT APPLICATION**
published in accordance with Art. 153(4) EPC

(43) Date of publication:
26.03.2025 Bulletin 2025/13

(21) Application number: 23816371.1

(22) Date of filing: 31.05.2023

(51) International Patent Classification (IPC):
$H01M\ 10/0565^{(2010.01)}$     $C08J\ 5/22^{(2006.01)}$
$H01M\ 10/052^{(2010.01)}$

(52) Cooperative Patent Classification (CPC):
C08J 5/22; H01M 10/052; H01M 10/0565

(86) International application number:
PCT/KR2023/007472

(87) International publication number:
WO 2023/234711 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.05.2022 KR 20220066984

(71) Applicant: LG Energy Solution, Ltd.
Seoul 07335 (KR)

(72) Inventors:
• NAM, Sunghyun
  Daejeon 34122 (KR)
• LEE, Jung Pil
  Daejeon 34122 (KR)
• HAN, Hyeaeun
  Daejeon 34122 (KR)
• KIM, Dong Kyu
  Daejeon 34122 (KR)

(74) Representative: Hoffmann Eitle
Patent- und Rechtsanwälte PartmbB
Arabellastraße 30
81925 München (DE)

(54) **POLYMER SOLID ELECTROLYTE AND PREPARATION METHOD THEREFOR**

(57) The present disclosure relates to a polymer solid electrolyte and a preparation method thereof. The polymer solid electrolyte includes a polymer including a cross-linkable functional group; a lithium salt; and a solvent including a first solvent and a second solvent, wherein the polymer solid electrolyte having a cross-linked structure and an amorphous polymer chain including the cross-linkable functional group, and wherein the cross-linked structure includes (a) a cross-linkage between cross-linkable functional groups, (b) a cross-linkage between the cross-linkable functional group and the first solvent, and (c) a linkage between the cross-linkable functional group and the lithium salt.

EP 4 528 875 A1

**Description**

[Technical Field]

This application claims the benefits of priorities based on Korean Patent Application No. 10-2022-0066984 filed on May 31, 2022 and Korean Patent Application No. 10-2023-0070168 filed on May 31, 2023.

The present disclosure relates to a polymer solid electrolyte and a preparation method thereof.

[Background]

Since a lithium secondary battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium secondary battery is a very important task.

A lithium secondary battery using a solid electrolyte has the advantages of increasing the safety of the battery, preventing leakage of the electrolyte solution, improving the reliability of the battery, and making it easy to manufacture a thin battery. In addition, since lithium metal can be used as an negative electrode, energy density can be improved, and it is expected to be applied to high-capacity secondary batteries for electric vehicles, in addition to small secondary batteries, and is in the limelight as a next-generation battery.

Polymer materials with ion conductivity can be used as raw materials for polymer solid electrolytes, among solid electrolytes, and hybrid materials formed by mixing polymer materials and inorganic materials are also proposed. As the inorganic material, an inorganic material such as oxide or sulfide may be used.

Such a conventional polymer solid electrolyte was prepared through a high-temperature drying process after forming a coating film. However, the conventional preparation technology for the polymer solid electrolyte has limitations in that it is difficult to prepare the polymer solid electrolyte with improved ionic conductivity due to the high crystallinity of the crystalline polymer or semi-crystalline polymer. In other words, the higher the crystallization degree of the polymer, the lower the mobility of the polymer chain. Accordingly, it was difficult to improve the ionic conductivity of the polymer solid electrolyte because there was a limitation in the movement of lithium ions inside the polymer solid electrolyte.

For example, conventional polymer solid electrolytes can be prepared by forming a coating film using polyvinyl alcohol (PVA) including a hydroxyl group, which is a cross-linkable functional group, as a polymer, and then performing a high-temperature drying process. Specifically, after preparing a PVA aqueous solution by dissolving the PVA in water, the PVA aqueous solution is applied on a substrate by solution casting to form a coating film, and dried at room temperature or high temperature to form a polymer solid electrolyte in the form of a PVA film. At this time, the high temperature may mean 80 °C or higher, which is the glass transition temperature (Tg) of PVA. In the drying process, after the moisture evaporates, a hydrogen bond between the cross-linkable functional groups included in the PVA is formed, and polymer chain folding occurs due to the hydrogen bond, and thus the crystallization degree of the polymer film increases. As the degree of crystallization increases, a polymer film with brittleness is formed. In polymer films with high degree of crystallization and brittleness, as the polymer chain mobility decreases, when there are dissociated ions inside the polymer film, a phenomenon in which the ionic mobility is also remarkably reduced occurs. For this reason, the general PVA film prepared by the high-temperature drying process after forming the coating film as described above exhibits properties that are not suitable as polymer solid electrolytes for lithium secondary batteries.

In order to overcome these limitations of conventional polymer solid electrolytes, a technique has been developed to improve the mobility of the polymer chain and improve the ionic conductivity of the polymer solid electrolyte by adding a plasticizer to a crystalline polymer or semi-crystalline polymer. However, when a plasticizer is used, it may be difficult to set process conditions because appropriate dispersibility and solubility (miscibility) between the polymer and the plasticizer must be secured. In addition, when a liquid plasticizer is applied, compatibility with the polymer is reduced, and it may be difficult to perform the preparation process of the polymer solid electrolyte.

Therefore, there is a demand for technology development that can improve the ionic conductivity of polymer solid electrolytes without additional additives such as plasticizers.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

[Summary]

[Technical Problem]

It is an object of the present disclosure to provide a polymer solid electrolyte with improved ionic conductivity.

It is another object of the present disclosure to provide a method for preparing a polymer solid electrolyte with improved ionic conductivity.

It is still another object of the present disclosure to provide an all-solid-state battery including a polymer solid electrolyte with improved ionic conductivity.

[Technical Solution]

In order to achieve the above objects, the present disclosure provides a polymer solid electrolyte including a polymer including a cross-linkable functional group (side chain); a lithium salt; and a solvent comprising a first solvent and a second solvent, wherein the polymer solid electrolyte has a cross-linked structure and an amorphous polymer chain including a cross-linkable functional group, and the cross-linked structure comprises (a) a cross-linkage between cross-linkable functional groups, (b) a cross-linkage between the cross-linkable functional group and the first solvent, and (c) a linkage between the cross-linkable functional group and the lithium salt.

The present disclosure also provides a method for preparing a polymer solid electrolyte comprising the steps of (S1) preparing a solution for forming a polymer solid electrolyte by adding a lithium salt to a solution which includes a polymer including a cross-linkable functional group and a first solvent; (S2) forming a coating film by applying the solution for forming the polymer solid electrolyte on a substrate; (S3) preparing a first polymer solid electrolyte by freezing and thawing the coating film to form a cross-linked structure of the polymer including the cross-linkable functional group, wherein the cross-linked structure of the polymer comprises the lithium salt and the first solvent; and (S4) exchanging the first solvent in the first polymer solid electrolyte with a second solvent to prepare the second polymer solid electrolyte.

The present disclosure also provides an all-solid-state battery including the polymer solid electrolyte.

[Advantageous Effects]

The polymer solid electrolyte according to the present disclosure has a cross-linked structure formed by a cross-linkable functional group comprised in the polymer and a structure comprising an amorphous polymer chain, and thus the crystallinity of the polymer is reduced, and thus the ionic conductivity can be improved.

In addition, the polymer solid electrolyte exhibits physical properties with reduced brittleness and increased ductility and viscosity, due to the above structural features.

In addition, the ionic conductivity of the polymer solid electrolyte can be improved through solvent exchange.

[Detailed Description]

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

As used herein, the term "cross-linked structure" refers to a structure comprising a three-dimensional frame formed by polymer chains and an internal space of the frame. The polymer chain may be formed by cross-linkages comprising cross-linkable functional groups included in the polymer. Since the cross-linked structure has a three-dimensional shape and has a form in which polymer chains are entangled with each other, it can also be referred to as a three-dimensional network structure.

**Polymer solid electrolyte**

The polymer solid electrolyte of the present disclosure is a polymer solid electrolyte comprising a polymer including a cross-linkable functional group; a lithium salt; and a solvent including a first solvent and a second solvent, wherein the polymer solid electrolyte comprises a cross-linked structure and an amorphous polymer chain including the cross-linkable functional group, and the cross-linked structure can comprise (a) a cross-linkage between cross-linkable functional groups, (b) a cross-linkage between the cross-linkable functional group and the first solvent, and (c) a linkage between the cross-linkable functional group and the lithium salt.

In the present disclosure, the (a) cross-linkage between cross-linkable functional groups may comprise a hydrogen bond between cross-linkable functional groups, and for example, the hydrogen bond may be a hydrogen bond between OH- groups.

If the cross-linked structure is formed only by the (a) cross-linkage between cross-linkable functional groups, crystallinity of the polymer solid electrolyte may be generated, and thus ionic conductivity may be reduced.

However, since the cross-linked structure comprise not only the cross-linkage (a) between cross-linkable functional groups, but also the cross-linkage (b) between the cross-linkable functional group and the first solvent, and the linkage (c) between the cross-linkable functional group and the lithium salt, the generation of crystallinity of the polymer solid electrolyte can be prevented.

In the present disclosure, the cross-linkage (b) between the cross-linkable functional group and the first solvent may comprise a hydrogen bond, for example, the hydrogen bond may be a hydrogen bond between OH- and H+. At this time, H+ may be derived from a water solvent.

The cross-linkage (b) between the cross-linkable functional group and the first solvent may mean a hydrogen bond between a part of the solvent remaining in the freezing and thawing processes and the cross-linkable functional group.

In addition, the cross-linkage (b) between the cross-linkable functional group and the first solvent interferes with the cross-linkage (a) between the cross-linkable functional groups, so that the cross-linked structure does not consist only of the cross-linkage (a) between the cross-linkable functional groups, and thus the increase in crystallinity of the polymer solid electrolyte can be prevented.

In the present disclosure, the linkage (c) between the cross-linkable functional group and the lithium salt may comprise a linkage by Lewis acid-base interaction, and for example, the linkage may be a linkage between OH- and Li+.

The linkage (c) between the cross-linkable functional group and the lithium salt is a linkage by Lewis acid-base interaction, and may be a type of linkage such as a metal-ligand linkage.

In addition, the linkage (c) between the cross-linkable functional group and the lithium salt interferes with the cross-linkage (a) between cross-linkable functional groups and the cross-linkage (b) between the cross-linkable functional group and the first solvent, so that the cross-linked structure does not consist only of the cross-linkage (a) between the cross-linkable functional groups, and thus the generation of crystallinity of the polymer solid electrolyte can be prevented, and at the same time, the formation of amorphous polymer chains can be promoted. As the amorphous polymer chain is formed, the mobility of the polymer chain is improved, and thus the hopping effect of the lithium ion is increased, so that the ionic conductivity of the polymer solid electrolyte can be improved.

In the present disclosure, the amorphous polymer chain may also be formed in a freezing process as described later, and refers to a polymer chain that does not form crystals by regular folding of the polymer chain and exists in a free behavior state. That is, the amorphous polymer chain may include a polymer including a cross-linkable functional group that does not form linkages as in (a), (b) and (c).

Due to the cross-linked structure, the polymer solid electrolyte is not easily broken or destroyed and thus can play a role as a support for an electrolyte including lithium ions stably.

In addition, due to the amorphous polymer chain, since the polymer solid electrolyte exhibits elasticity, it can minimize brittleness, which is a property of being easily broken, and since the mobility of the polymer chain is excellent and the mobility of lithium ions inside the electrolyte is improved, the polymer solid electrolyte with improved ionic conductivity can be provided.

In the present disclosure, the cross-linkable functional group included in the polymer including the cross-linkable functional group may have a property capable of forming a cross-linked structure by forming linkages as in (a), (b) and (c) above.

For example, the cross-linkable functional group may include one or more selected from the group consisting of a hydroxyl group, a carboxyl group, and an amide group.

In addition, the weight average molecular weight (Mw) of the polymer including the cross-linkable functional group may be 80,000 g/mol to 130,000 g/mol, and specifically, may be 80,000 g/mol or more, 83,000 g/mol or more or 85,000 g/mol or more, and 90,000 g/mol or less, 110,000 g/mol or less or 130,000 g/mol or less. If the weight average molecular weight (Mw) of the polymer including the cross-linkable functional group is less than 80,000 g/mol, the linkage by the cross-linkable functional group may not be sufficiently formed to obtain a cross-linked structure. If the weight average molecular weight (Mw) of the polymer including the cross-linkable functional group exceeds 130,000 g/mol, the entanglement of the polymer chain is increased in the polymer solution used in the preparation process, and the penetration rate of the solvent into the polymer chain is decreased. Accordingly, gelation of the polymer is accelerated, and thus the solubility of the polymer is lowered and the bonding by the cross-linkable functional group cannot be performed smoothly, so the formation of a cross-linked structure may not be easy.

In addition, the polymer including the cross-linkable functional group may have characteristic in that the linkages (a), (b) and (c) are well formed by the cross-linkable functional group included in the phase separated polymer upon freezing because phase separation between the polymer and the solvent is smoothly performed in the polymer solution used in the preparation process.

For example, the polymer including the cross-linkable functional group may include at least one selected from the group consisting of polyvinyl alcohol (PVA), gelatin, methylcellulose, agar, dextran, poly(vinyl pyrrolidone), poly (acryl amide), poly (acrylic acid) (PAA), starchcarboxymethyl cellulose, hyaluronic acid-methylcellulose, chitosan, poly(N-isopropylacrylamide) and amino-terminated polyethylene glycol (amino-terminated PEG). Preferably, the polymer including the cross-linkable functional group may be PVA, and the PVA can be efficiently phase separated from the solvent upon freezing in the preparation process of the polymer solid electrolyte and it may be advantageous in forming a cross-linked structure by the linkages (a), (b) and (c) derived from the cross-linkable functional group of PVA phase separated from the solvent.

In the present disclosure, the lithium salt is included in a dissociated state in the inner space of the cross-linked structure, thereby improving the ionic conductivity of the polymer solid electrolyte.

In addition, the lithium salt can form (c) the linkage between the cross-linkable functional group and the lithium salt, thereby preventing the generation of crystallinity of the polymer solid electrolyte and promoting the formation of an amorphous polymer chain at the same time.

The lithium salt may include at least one selected from the group consisting of $(CF_3SO_2)_2NLi$ (Lithium bis(trifluoromethanesulphonyl)imide, LiTFSI), $(FSO_2)_2NLi$(Lithium bis (fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In the present disclosure, the molar ratio ([Li]/[G]) of the cross-linkable functional group ([G]) of the polymer including the cross-linkable functional group and lithium ([Li]) of the lithium salt included in the polymer solid electrolyte may be exceeding 0.1 and less than 0.5, and specifically may be exceeding 0.1, 0.2 or more, or 0.3 or more, and may be 0.4 or less, or 0.5 or less. If the molar ratio ([Li]/[G]) is 0.1 or less, as the content of the lithium salt is reduced, the ionic conductivity of the polymer solid electrolyte may be lowered. If the molar ratio ([Li]/[G]) is 0.5 or more, the content of the polymer including the cross-linkable functional group is reduced, so that the linkages (a), (b) and (c) may not be sufficiently formed and thus crystallinity may be increased and ionic conductivity may be decreased. If the cross-linkable functional group is a hydroxyl group (OH-), the [G] may be expressed as [OH] or [O].

In one embodiment of the present disclosure, the solvent is included inside the cross-linked structure formed by the physical cross-linkage of the polymer solid electrolyte, so that the solvent exchange process is easily performed, thereby improving the ionic conductivity of the polymer solid electrolyte.

The solvent may comprise a first solvent and a second solvent.

The first solvent and the second solvent are solvents that are distinct from each other, and may have different solubility for the polymer including the cross-linkable functional group.

The first solvent has high solubility for the polymer including the cross-linkable functional group and can form a cross-linked structure with the polymer including the cross-linkable functional group. On the other hand, since the second solvent has low solubility for the polymer including the cross-linkable functional group, it is difficult to form a cross-linked structure with the polymer including the cross-linkable functional group.

In addition, the first solvent and the second solvent may be solvents classified into an aqueous electrolyte solution or a non-aqueous electrolyte solution depending on the structure of the battery.

In addition, the first solvent and the second solvent may be solvents distinguished from each other depending on the flame-retardant electrolyte.

The first solvent may be any one selected from the group consisting of water, ethanol, isopropyl alcohol, dimethyl sulfoxide, acetonitrile, NMP (N-Methyl-2-pyrrolidone), a co-solvent obtained by mixing water and alcohols, and a co-solvent obtained by mixing water and dimethyl sulfoxide.

The boiling point of the first solvent may be 150 °C or less. The boiling point of the first solvent may be lower than that of the second solvent. If the boiling point of the first solvent exceeds 150 °C, the hydrogen bond formed inside the polymer and the Lewis acid-base interaction force are disrupted during the removal process of the first solvent, and thus the mechanical properties of the polymer solid electrolyte may be greatly deteriorated.

The first solvent can form a cross-linked structure through a freezing/thawing process after dissolving a polymer including a cross-linkable functional group. For example, if the first solvent is water, phase separation from a polymer including a cross-linkable functional group occurs distinctly during the freezing process, and an ice phase and a rich phase of a polymer including a cross-linkable functional group may be formed.

Replacing the first solvent with the second solvent is to use the polymer solid electrolyte according to the present disclosure in battery chemistry vulnerable to water. For example, if water is used as the first solvent, there is no problem in battery chemistry that does not show degradation in properties by aqueous electrolytes, but in battery chemistry that is vulnerable to water, there is a problem that the performance of the battery is deteriorated or the battery does not operate. In order to solve this problem, it is possible to provide a polymer solid electrolyte capable of stably operating the battery by removing the first solvent and replacing it with the second solvent usable inside the battery without loss of ionic conductivity.

In addition, if the first solvent is used, there is no problem in the preparation of the solid electrolyte, but there may be a problem that the solvent is vulnerable to combustion in the event of a fire or explosion of the battery, causing greater damage. In order to solve this problem, it is possible to provide a polymer solid electrolyte capable of stably operating the battery by removing the first solvent and replacing it with the second solvent having flame retardant properties.

In addition, if the first solvent is used, there is no problem with the preparation of the solid electrolyte, but when the first solvent is applied as an electrolyte inside the battery, there may be a problem of reducing the lifetime of the product due to unexpected side reactions and decomposition of the solvent during the operation of the battery. In order to solve this problem, it is possible to provide a polymer solid electrolyte capable of stably operating the battery by removing the first solvent and replacing it with the second solvent which is stable from side reactions with the solvent.

The second solvent may comprise at least one selected from the group consisting of ethyl methyl carbonate (EMC), dimethyl carbonate (DMC), ethylene carbonate (EC), propylene carbonate (PC), vinylene carbonate (VC), diethyl carbonate (DEC), dimethyl carbonate (DMC), methyl ethyl carbonate (MEC), ethyl methyl carbonate (EMC), tetrahydrofuran (THF), 2-methyltetrahydrofuran (2-MeTHF), dioxolane (DOX), dimethoxyethane (DME), diethoxyethane (DEE), γ-butyrolactone (GBL), acetonitrile (AN) and sulfolane, or a combination thereof. For example, it may comprise EC: EMC (1: 3), EC: EMC (1: 1), EC: DMC: EMC: FEC (3: 3: 3: 1), etc., but is not limited to these examples only.

The content of the first solvent in the polymer solid electrolyte may be 1 to 1000 ppm. If the content of the first solvent exceeds 1000 ppm, there is a problem in that absorption of the second solvent is inhibited, thereby reducing physical properties expected from the second solvent, for example, ionic conductivity or reducing stability of the battery.

In the present disclosure, the polymer solid electrolyte may be in the form of a free-standing film or a coating layer. The free-standing film refers to a film capable of maintaining a film shape by itself without a separate support at room temperature and pressure. The coating layer means a layer obtained by coating on a substrate. If the polymer solid electrolyte is in the form of a coating layer, the coating layer may be in the form of a layer coated on an electrode.

The free-standing film or coating layer exhibits elasticity to minimize brittleness and has characteristics as a support that stably includes lithium ions, and thus it can be in a suitable form as a polymer solid electrolyte.

In the present disclosure, the ionic conductivity of the polymer solid electrolyte may be $10^{-4}$ S/cm or more.

The polymer solid electrolyte has lower crystallinity and improved ionic conductivity due to the structural characteristics including the cross-linked structure as described above. Therefore, despite being a solid electrolyte, it can improve the performance of an all-solid-state battery by exhibiting an ionic conductivity equivalent to or higher than that of conventional liquid electrolytes.

**Preparation method of polymer solid electrolyte**

The method for preparing the polymer solid electrolyte according to an embodiment of the present disclosure may comprise the following steps:

(S1) preparing a solution for forming a polymer solid electrolyte by adding a lithium salt to a solution which includes a polymer including a cross-linkable functional group and a first solvent;
(S2) forming a coating film by applying the solution for forming the polymer solid electrolyte on a substrate;
(S3) freezing and thawing the coating film to form a cross-linked structure of the polymer including the cross-linkable functional group, thereby preparing a first polymer solid electrolyte, wherein the cross-linked structure of the polymer comprises the lithium salt and the first solvent; and
(S4) exchanging the first solvent in the first polymer solid electrolyte with a second solvent to prepare a second polymer solid electrolyte.

In the preparation method of the polymer solid electrolyte, the plasticizer used to reduce the crystallinity of the polymer is not added, and crystallization of the polymer can be prevented by inducing (a) a cross-linkage between cross-linkable functional groups, (b) a cross-linkage between the cross-linkable functional group and the first solvent, and (c) a linkage between the cross-linkable functional group and the lithium salt, by the cross-linkable functional group included in the polymer through the freezing process, and as a result, the polymer solid electrolyte with improved ionic conductivity can be prepared. Hereinafter, the method for preparing a polymer solid electrolyte according to the present disclosure will be described in detail for each step.

In one embodiment of the present disclosure, in step (S1), a solution for forming a polymer solid electrolyte can be prepared by adding a lithium salt to a solution which includes a polymer including the cross-linkable functional group and a first solvent.

The polymer, the first solvent, and the lithium salt are as described above.

The concentration of the solution of the polymer including the cross-linkable functional group can be appropriately adjusted in consideration of the extent to which the coating process can proceed smoothly, when the solution for forming the polymer solid electrolyte is applied to the substrate. For example, the concentration of the solution of the polymer including the cross-linkable functional group may be 5% to 20%, and specifically may be 5% or more, 7% or more or 9% or more, and may be 13% or less, 17% or less or 20 % or less. If the concentration of the solution of the polymer including the cross-linkable functional group is less than 5%, the concentration is too dilute and thus it may flow down when applied on the substrate. If the concentration of the solution of the polymer including the cross-linkable functional group exceeds 20%, it is difficult to dissolve the lithium salt at a desired concentration in the solution of the polymer, and it may be difficult to apply it in the form of a uniform thin film due to its high viscosity.

In one embodiment of the present disclosure, in step (S2) above, a coating film may be formed by applying the solution for forming the polymer solid electrolyte on the substrate.

The substrate is not particularly limited as long as it can serve as a support on which the solution for forming the polymer solid electrolyte is applied. For example, the substrate may be stainless steel (SS), a polyethylene terephthalate film, a polytetrafluoroethylene film, a polyethylene film, a polypropylene film, a polybutene film, a polybutadiene film, a vinyl chloride copolymer film, a polyurethane film, an ethylenevinyl acetate film, an ethylene-propylene copolymer film, an ethylene-ethyl acrylate copolymer film, an ethylene-methyl acrylate copolymer film, or a polyimide film.

In addition, the coating method is not particularly limited as long as it is a method capable of applying the solution for forming the polymer solid electrolyte in the form of a film on the substrate. For example, the coating method may be bar coating, roll coating, spin coating, slit coating, die coating, blade coating, comma coating, slot die coating, lip coating or solution casting.

In one embodiment of the present disclosure, in step (S3), a first polymer solid electrolyte can be prepared by freezing and thawing the coating film to form a cross-linked structure of the polymer including the cross-linkable functional group, wherein the cross-linked structure of the polymer includes the lithium salt and the first solvent.

In the freezing process, the polymer and water included in the aqueous solution of the polymer including the cross-linkable functional group used to form the coating film may be phase separated. The phase separation may be induced because the strength of the hydrogen bond between the water molecules is stronger than that between the cross-linkable functional group and the water molecules. Water molecules aggregated by hydrogen bonds between the water molecules exist in the ice phase by a freezing process. As a result, the number of cross-linkable functional groups forming hydrogen bonds through interaction with the water molecules is significantly reduced.

Due to the phase separation, the inside of the coating film is divided into (i) a polymer-poor phase and (ii) a polymer-rich phase.

The (i) polymer-poor phase is a portion including water molecules aggregated by hydrogen bonds between water molecules and exists as an ice phase, which can also be referred to as a free water state.

The (ii) polymer-rich phase is a portion including a polymer phase separated from water. The phase-separated polymer is a polymer including a cross-linkable functional group that is free from interaction with water molecules, and is in a free state after phase separation, does not form crystals by regular folding, and exists in an amorphous state with relatively free behavior, which is called an amorphous polymer chain.

In addition, some of the cross-linkable functional groups included in the phase separated polymer form localized crystallites. The localized crystallites act as a cross-linkable junction point to form a cross-linked structure including linkages (a), (b) and (c) above.

In addition, in the thawing process after the freezing process, the ice included in the (i) polymer-poor phase melts and evaporates, and thus a polymer solid electrolyte with an increased free volume can be prepared.

In addition, the freezing may be performed by appropriately selecting conditions sufficient to freeze the coating film. For example, the freezing may be performed at a temperature of -30 °C to -10 °C, and specifically, the freezing temperature may be -30 °C or higher, -25 °C or higher, or -23 °C or higher, and may be -18 °C or lower, -15 °C or lower or -10 °C or lower. If the freezing temperature is less than -30 °C, cracks may occur in the coating film. If the freezing temperature exceeds -10 °C, formation of regions of amorphous polymer chains can be difficult because sufficient phase separation between the polymer and water is not achieved. In addition, the freezing may be performed in consideration of a sufficient freezing time within the range of 20 hours to 30 hours.

In addition, the thawing can be performed by appropriately selecting conditions capable of thawing to the extent that the frozen coating film can be applied as a polymer solid electrolyte. For example, the thawing temperature may be 15 °C to 35 °C or may be room temperature (25 °C). If the thawing temperature is less than 15 °C, moisture drying efficiency may decrease after thawing (ice melting). If the thawing temperature exceeds 35 °C, the coating film may shrink and thus cause wrinkles or warping.

As described above, the bonding of (a), (b), and (c) is induced through the freezing and thawing processes to form a cross-linked structure and an amorphous polymer chain.

Therefore, the degree of formation of the cross-linked structure can be controlled according to the number of times that the freezing and thawing processes are performed. When the process of performing the thawing process after performing the freezing process is referred to as one cycle, the freezing and thawing processes may be performed for 1 cycle or more, 2 cycles or more, 3 cycles or more, or 5 cycles or more. The upper limit of the cycles is not particularly limited, but may be 10 cycles or less, 13 cycles or less, or 15 cycles or less. Within the above range, as the number of cycles of the freezing and thawing processes increases, more cross-linked structures may be formed, and thus the modulus and strength of the polymer solid electrolyte may increase.

In one embodiment of the present disclosure, in step (S4), the second polymer solid electrolyte can be prepared by exchanging the first solvent in the first polymer solid electrolyte with a second solvent.

The first solvent and the second solvent are as described above.

The solvent exchange means removing the first solvent in the first polymer solid electrolyte and exchanging it so that the second solvent exists mostly. The second polymer solid electrolyte including the second solvent can be prepared by solvent exchange as described above.

In the solvent exchange, the first solvent included in the first polymer solid electrolyte may be dried at high temperature and it may be immersed in the second solvent to exchange the first solvent with the second solvent. More specifically, the first polymer solid electrolyte including the first solvent may be placed in a vacuum oven, dried at a low temperature (50 °C) for 6 hours, then dried at a high temperature (100 °C) for 12 hours, and then immersed the first solid electrolyte dried in a dry room environment in the second solvent at room temperature for 24 hours, thereby exchanging the first solvent with the second solvent.

**All-solid-state battery**

The present disclosure also relates to an all-solid-state battery including the polymer solid electrolyte, wherein the all-solid-state battery includes a negative electrode, a positive electrode, and a polymer solid electrolyte interposed between the negative electrode and the positive electrode, and the solid electrolyte has the above-described characteristics.

Specifically, the polymer solid electrolyte may be suitable as an electrolyte for an all-solid-state battery because physical cross-linkage is formed through the freezing and thawing processes and thus crystallinity is lowered, and ionic conductivity is improved through a solvent exchange process.

In the present disclosure, the positive electrode included in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$(wherein, $0 \leq a \leq 0.2$, $0.6 \leq b \leq 1$, $0 \leq b' \leq 0.2$, $0 \leq c \leq 0.2$; M comprises Mn and at least one selected from the group consisting of Ni, Co, Fe, Cr, V, Cu, Zn and Ti; M' is at least one selected from the group consisting of Al, Mg and B, and A is at least one selected from the group consisting of P, F, S and N); lithium manganese oxide such as Formula $Li_{1+y}Mn_{2-y}O_4$ (wherein, y is 0 - 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B or Ga, y=0.01 - 0.3); lithium manganese composite oxide represented by Formula $LiMn_{2-y}M_yO_2$ (wherein, M=Co, Ni, Fe, Cr, Zn or Ta, y=0.01 - 0.1) or $Li_2Mn_3MO_8$ (wherein, M=Fe, Co, Ni, Cu or Zn); $LiMn_2O_4$ in which part of Li in the Formula is substituted with alkaline earth metal ions; disulfide compounds; and $Fe_2(MoO_4)_3$.

In addition, the positive electrode active material may be included in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be included in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally included in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present disclosure, the negative electrode comprised in the all-solid-state battery comprises a negative electrode active material layer, and the negative electrode active material layer may be formed on one surface of the negative electrode current collector.

The negative electrode active material may be a material capable of reversibly intercalating or de-intercalating lithium ion ($Li^+$), a material capable of reacting with lithium ion to reversibly form a lithium-including compound, lithium metal or a lithium alloy.

The material capable of reversibly intercalating or de-intercalating lithium ion ($Li^+$) may be, for example, crystalline carbon, amorphous carbon or mixtures thereof. The material capable of reacting with the lithium ion ($Li^+$) to reversibly form a lithium-including compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present disclosure.

In addition, the present disclosure provides a battery module comprising the all-solid-state battery as a unit cell, a battery pack comprising the battery module, and a device comprising the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system. Hereinafter, preferred examples are presented to aid understanding of the present disclosure, but the following examples are only illustrative of the present disclosure, and it will be apparent to those skilled in the art that various changes and modifications can be made within the scope and technical idea of the present disclosure, and also it is natural that such variations and modifications are within the scope of the appended claims.

Hereinafter, preferred examples are presented to aid understanding of the present disclosure, but the following examples are provided only to facilitate understanding of the present disclosure, and the present disclosure is not limited thereto.

In the following Examples and Comparative Examples, polymer solid electrolytes comprising a polymer including a cross-linkable functional group, a lithium salt, and a solvent as described in Table 1 below were prepared.

Table 1:

| | Polymer | Lithium salt | [Li]/[O] | Whether or not the freezing/thawing process is applied | First solvent | Second solvent |
|---|---|---|---|---|---|---|
| **Example 1** | PVA | LiTFSI | 0.1 | applied | water ($H_2O$) | - |
| **Example 2** | PVA | LiTFSI | 0.4 | applied | water ($H_2O$) | - |
| **Example 3** | PVA | LiTFSI | 0.4 | applied | water ($H_2O$) | EMC |
| **Example 4** | PVA | LiTFSI | 0.4 | applied | water ($H_2O$) | DMC |
| **Example 5** | PVA | LiTFSI | 0.25 | applied | DMSO | EMC |
| **Comparative Example 1** | PVA | LiTFSI | 0.4 | non-applied (80 °C drying) | water ($H_2O$) | EMC |
| **Comparative Example 2** | PVA | LiTFSI | 0.4 | non-applied (25 °C drying) | water ($H_2O$) | EMC |
| **Comparative Example 3** | PVA | LiTFSI | 0.4 | non-applied (80 °C drying) | EMC | - |
| **Comparative Example 4** | PEO | LiTFSI | 0.4 | applied | Acetonitrile | - |
| **Comparative Example 5** | PEO | LiTFSI | 0.4 | applied | water ($H_2O$) | EMC |

(continued)

|  | Polymer | Lithium salt | [Li]/[O] | Whether or not the freezing/thawing process is applied | First solvent | Second solvent |
|---|---|---|---|---|---|---|
| Comparative Example 6 | PVA | LiTFSI | 0.5 | applied | water ($H_2O$) | - |

**<Examples>**

**Example 1: Preparation of polymer solid electrolyte**

PVA (Mw: 89,000 g/mol; degree of hydrolysis: > 99%) was mixed with water to prepare a 10% PVA aqueous solution. LiTFSI was added to the PVA aqueous solution, and then stirred to prepare a solution including PVA, which is a polymer having a cross-linkable functional group, and LiTFSI, which is a lithium salt. At this time, the molar ratio ([Li]/[O]) of "O" included in the cross-linkable functional group of the PVA and "Li" included in the lithium salt was set to 0.1.

The solution was applied on SS foil, which is a substrate, by a bar coating method to form a coating film, and then, it was frozen at -20 °C for 24 hours and thawed at 25 °C to prepare a polymer solid electrolyte.

**Example 2**

A polymer solid electrolyte was prepared in the same way as in Example 1 above, except that the molar ratio ([Li]/[O]) of "O" included in the cross-linkable functional group of the PVA and "Li" included in the lithium salt is 0.4.

**Example 3**

A polymer solid electrolyte was prepared in the same way as in Example 1 above, except that the molar ratio ([Li]/[O]) of "O" included in the cross-linkable functional group of the PVA and "Li" included in the lithium salt is 0.4, water ($H_2O$) as the first solvent inside the prepared polymer solid electrolyte is removed, and then, ethyl methyl carbonate (EMC) as the second solvent is added to prepare the polymer solid electrolyte.

**Example 4**

A polymer solid electrolyte was prepared in the same manner as in Example 3, except that the second solvent is DMC.

**Example 5**

A polymer solid electrolyte was prepared in the same manner as in Example 3, except that the molar ratio ([Li]/[O]) of "O" included in the cross-linkable functional group of the PVA and "Li" included in the lithium salt is 0.25, and the first solvent is DMSO.

**<Comparative Examples>**

**Comparative Example 1**

A polymer solid electrolyte was prepared in the same manner as in Example 3, except that a solution including PVA, which is a polymer with a cross-linkable functional group, and LiTFSI, which is a lithium salt, was coated on SS foil, which is a substrate, and then dried at 80 °C without freezing and thawing processes.

**Comparative Example 2**

A polymer solid electrolyte was prepared in the same manner as in Example 3, except that a solution including PVA, which is a polymer with a cross-linkable functional group, and LiTFSI, which is a lithium salt, is coated on SS foil, which is a substrate, and then dried at 25 °C without freezing and thawing processes.

### Comparative Example 3

A polymer solid electrolyte was prepared in the same manner as in Example 2, except that a solution including PVA, which is a polymer with a cross-linkable functional group, is mixed with EMC, and LiTFSI, which is a lithium salt, is coated on SS foil, which is a substrate, and then dried at 80 °C without freezing and thawing processes.

### Comparative Example 4

A polymer solid electrolyte was prepared in the same manner as in Example 2, except that a PEO polymer is used instead of PVA, and 7the PEO polymer is dissolved in acetonitrile.

### Comparative Example 5

A polymer solid electrolyte was prepared in the same manner as in Example 3, except that a PEO polymer is used instead of PVA.

### Comparative Example 6

A polymer solid electrolyte was prepared in the same manner as in Example 1, except that the molar ratio ([Li]/[O]) of "O" included in the cross-linkable functional group of the PVA and "Li" included in the lithium salt is 0.5.

### <Experimental Example>

### Experimental Example 1

In order to measure the ionic conductivity of the polymer solid electrolytes in the form of films prepared in Examples and Comparative Examples, the polymer solid electrolyte was punched out in a circular shape with a size of 1.7671 cm$^2$, and the punched polymer solid electrolyte was placed between two sheets of stainless steel (SS) to prepare a coin cell.

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 1 below, the ionic conductivity of the polymer solid electrolyte was calculated.

[Equation 1]

wherein, $\sigma_i$ is the ionic conductivity (S/cm) of the polymer solid electrolyte, R is the resistance ($\Omega$) of the polymer solid electrolyte measured by the electrochemical impedance spectrometer, L is the thickness($\mu$m) of the polymer solid electrolyte, and A is the area(cm$^2$) of the polymer solid electrolyte.

The ionic conductivity of the polymer solid electrolyte calculated using Equation 1 above, the possibility

$$\sigma_i = \frac{L}{RA}$$

of forming a free-standing film, and the results of observing the appearance of the polymer solid electrolyte are shown in Table 2 below. At this time, the possibility of forming the free-standing film (formation: ∘, non-formation: X) and the appearance of the polymer solid electrolyte were visually observed.

Table 2:

| | Ionic conductivity (S/cm) | Possibility of forming the free-standing film | Sample status after freezing/ thawing process | Remarks |
|---|---|---|---|---|
| **Example 1** | $4.1 \times 10^{-7}$ | O | free-standing film | A free-standing film is formed, but the ionic conductivity is low and brittleness is also observed |
| **Example 2** | $1.6 \times 10^{-4}$ | O | free-standing film | |
| **Example 3** | $2.2 \times 10^{-4}$ | O | free-standing film | |

(continued)

|  | Ionic conductivity (S/cm) | Possibility of forming the free-standing film | Sample status after freezing/ thawing process | Remarks |
|---|---|---|---|---|
| **Example 4** | $2.1 \times 10^{-4}$ | O | free-standing film | |
| **Example 5** | $2.6 \times 10^{-5}$ | - | - | Difficult to prepare PVA-LiTFSI solution |
| **Comparative Example 1** | not measurable | X | gel | - Impossible to prepare uniform sample on substrate - Highly viscous gel form, not film form |
| **Comparative Example 2** | $4.2 \times 10^{-8}$ | X | film | Low mechanical strength of the film due to the absence of cross-linkage |
| **Comparative Example 3** | not measurable | X | - | Inability to dissolve PVA |
| **Comparative Example 4** | not measurable | X | - | Network formation X |
| **Comparative Example 5** | not measurable | X | - | Network formation X |
| **Comparative Example 6** | $1.8 \times 10^{-3}$ | X | gel | The ionic conductivity is high, but it is in the form of a gel with high viscosity, not a film state |

As shown in Table 2 above, it was confirmed that the polymer solid electrolyte in the form of a free-standing film could be prepared by using PVA having a molar ratio ([Li]/[OH]) of cross-linkable functional group and lithium salt in an appropriate range as a polymer including the cross-linkable functional group, and applying the freezing and thawing process (Examples 1 to 5).

In Comparative Example 1, an electrolyte was prepared using a high-temperature drying process at 80 °C, and was in the form of a liquid rather than a film.

In Comparative Example 2, an electrolyte was prepared using a room temperature drying process at 25 °C, and it was found that the polymer solid electrolyte had low mechanical strength and low ionic conductivity due to the absence of physical cross-linkage formed by the freezing and thawing process.

In Comparative Example 3, an electrolyte was prepared using a high-temperature drying process at 80 °C, and a solution was prepared by adding PVA, a polymer including a cross-linkable functional group, to an ethyl methyl carbonate (EMC) solvent, but the PVA did not dissolve in the EMC solvent and was in the form of a liquid rather than a film.

In Comparative Examples 4 and 5, PEO was used as the polymer, but it was found that even when the freezing and thawing process is applied, a cross-linked structure is not formed, so the ionic conductivity is remarkably low.

## Example 6

A polymer solid electrolyte was prepared in the same manner as in Example 1, except that the freezing and thawing processes were performed for 2 cycles.

## Example 7

A polymer solid electrolyte was prepared in the same manner as in Example 1, except that the freezing and thawing processes were performed for 1 cycle.

## Example 8

A polymer solid electrolyte was prepared in the same manner as in Example 1, except that the freezing and thawing processes were performed for 5 cycles.

## Example 9

A polymer solid electrolyte was prepared in the same manner as in Example 1, except that the freezing and thawing processes were performed for 10 cycles.

**Comparative Example 7**

PVA (Mw: 89,000 g/mol; degree of hydrolysis: > 99%) was mixed with water to prepare a 10 wt% PVA aqueous solution, and then, the obtained aqueous solution was applied on SS foil, and then dried at high temperature (90 °C, 3 hours) to prepare a PVA film.

**Comparative Example 8**

A PVA film was prepared in the same manner as in Comparative Example 9, except that boric acid was added as a cross linker.

**Experimental Example 2**

An experiment was conducted to compare the presence and degree of formation of a cross-linked structure inside the polymer solid electrolyte.
Since only the presence and degree of formation of the cross-linked structure were compared, the PVA film of Comparative Example 7, which did not contain a cross-linked structure, and Comparative Example 8, in which a chemical cross-linked structure was formed by a cross-linker, were used for comparison.

(1) Check the degree of swelling

After immersing the sample to be tested in water at room temperature (25 °C) for 12 hours, the degree of swelling of the sample was confirmed, and the degree of swelling was determined according to the following criteria.

<Criteria for determining the degree of swelling>
◎: Swelled to 80% or more of the total volume.
○: Swelled to 50% or more of the total volume.
△: Swelled to 20% or more of the total volume.
X: Swelled to less than 10% of the total volume.
(2) Modulus
Modulus was measured with a universal testing machine (UTM) .

Table 3:

| | Type of film | Number of executions of freezing/thawing process (cycle) | Modulus (MPa) | Degree of swelling (12 hours @25°C) | Presence or absence of cross-linked structure |
|---|---|---|---|---|---|
| **Example 2** | PVA-including polymer solid electrolyte film | 3 | <1 | X | physical cross-linked structure |
| **Example 6** | PVA-including including polymer solid electrolyte film | 2 | <0.1 | △ | physical cross-linked structure |
| **Example 7** | PVA-including polymer solid electrolyte film | 1 | <0.01 | ○ | physical cross-linked structure |
| **Example 8** | PVA-including polymer solid electrolyte film | 5 | 1 ~ 5 | X | physical cross-linked structure |
| **Example 9** | PVA-including polymer solid electrolyte film | 10 | 1 ~ 5 | X | physical cross-linked structure |

(continued)

|  | Type of film | Number of executions of freezing/thawing process (cycle) | Modulus (MPa) | Degree of swelling (12 hours @25°C) | Presence or absence of cross-linked structure |
|---|---|---|---|---|---|
| **Comparative Example 7** | PVA film | X(high temperature drying) | 1000 | ◎ | - |
| **Comparative Example 8** | PVA and cross-linker-including film | X (high temperature drying) | 200～500 | X | Chemical cross-linked structure |

Referring to Table 3, it can be seen that Examples 2 and 6 to 9 illustrates that polymer solid electrolytes prepared by freezing and thawing processes exhibit modulus above a certain level, and as the cycle of the freezing and thawing processes increases, the modulus also increases. In addition, the degree of swelling decreased as the number of cycles increased. In general, the degree of swelling and mechanical properties of polymers are greatly affected by the degree of crosslinking. The formation of cross-linking points serves to increase the internal resistance of the polymer chain, thereby causing an increase in resistance to swelling and mechanical strength. In particular, the formation of physical cross-links based on the freezing-thawing processes is affected by the number of repetitions of the freezing-thawing process. From the result that the modulus increases and the degree of swelling decreases as the number of cycles increases, it can be seen that as the number of cycles increases, the cross-linked structure also increases. Although Example 1 showed that the degree of swelling was 50% or more of the total volume, as a result measured after 12 hours at room temperature, it is suitable for the physical properties required of a polymer solid electrolyte for an all-solid-state battery.

It can be seen that the PVA film of Comparative Example 7 swelled to 80% or more of the total volume, and from this, it can be seen that no cross-linked structure is comprised inside the polymer.

The PVA film of Comparative Example 8 has a chemical cross-linked structure formed by the addition of boric acid which is a cross-linker, and it was found that it reduces the modulus compared to Comparative Example 7 where no cross-linked structure is formed.

The PVA film of Comparative Example 8 has a reduced modulus compared to Comparative Example 7 because the crystallinity decreases and the flexibility of the polymer increases as a chemical cross-linked structure is formed.

On the other hand, Examples 2 and 6 to 9 correspond to hydrogel-type PVA films based on a physical cross-linking formed using the freezing and thawing processes, unlike the preparation methods of Comparative Examples 7 and 8. This indicates a tendency for the modulus to increase as the crosslinking increases. Examples 2 and 6 to 9 illustrated that as the cycle of freezing and thawing processes increased, the cross-linked structure also increased, and the modulus also tended to increase. Through the freezing and thawing processes, some of the cross-linkable functional groups included in PVA form localized crystallites, and the localized crystallites act as a cross-linkable junction point to increase the modulus.

In the above, although the present disclosure has been described by way of limited embodiments and drawings, the present disclosure is not limited thereto, and it is apparent to those skilled in the art that various modifications and variations can be made within the equivalent scope of the technical spirt of the present disclosure and the claims to be described below.

**Claims**

1. A polymer solid electrolyte, comprising:

   a polymer including a cross-linkable functional group;
   a lithium salt; and
   a solvent including a first solvent and a second solvent,
   wherein the polymer solid electrolyte having a cross-linked structure and an amorphous polymer chain including the cross-linkable functional group, and
   wherein the cross-linked structure includes (a) a cross-linkage between cross-linkable functional groups, (b) a cross-linkage between the cross-linkable functional group and the first solvent, and (c) a linkage between the cross-linkable functional group and the lithium salt.

2. The polymer solid electrolyte according to claim 1, wherein:

   the cross-linkage (a) between cross-linkable functional groups comprises a hydrogen bond,

the cross-linkage (b) between the cross-linkable functional group and the first solvent comprises a hydrogen bond, and
the linkage (c) between the cross-linkable functional group and the lithium salt comprises a linkage by Lewis acid-base interaction.

3. The polymer solid electrolyte according to claim 1, wherein a content of the first solvent is 1 to 1000 ppm.

4. The polymer solid electrolyte according to claim 1,
wherein the first solvent is at least one selected from the group consisting of water, ethanol, isopropyl alcohol, dimethyl sulfoxide, acetonitrile, N-Methyl-2-pyrrolidone (NMP), a co-solvent obtained by mixing water and alcohols, and a co-solvent obtained by mixing water and dimethyl sulfoxide.

5. The polymer solid electrolyte according to claim 1,
wherein the second solvent is at least one selected from the group consisting of ethyl methyl carbonate (EMC), dimethyl carbonate (DMC), ethylene carbonate (EC), propylene carbonate (PC), vinylene carbonate (VC), diethyl carbonate (DEC), dimethyl carbonate (DMC), methyl ethyl carbonate (MEC), ethyl methyl carbonate (EMC), tetrahydrofuran (THF), 2-methyltetrahydrofuran (2-MeTHF), dioxolane (DOX), dimethoxyethane (DME), diethoxyethane (DEE), $\gamma$-butyrolactone (GBL), acetonitrile (AN), and sulfolane.

6. The polymer solid electrolyte according to claim 1,
wherein the cross-linkable functional group comprises at least one selected from the group consisting of a hydroxyl group, a carboxyl group, and an amide group.

7. The polymer solid electrolyte according to claim 1,
wherein the polymer including the cross-linkable functional group comprises at least one selected from the group consisting of polyvinyl alcohol (PVA), gelatin, methylcellulose, agar, dextran, poly(vinyl pyrrolidone), poly(acryl amide), starchcarboxymethyl cellulose, hyaluronic acid-methylcellulose, chitosan, poly(N-isopropylacrylamide) and amino-terminated polyethylene glycol (amino-terminated PEG).

8. The polymer solid electrolyte according to claim 1, wherein a molar ratio ([Li]/[G]) of lithium ([Li]) of the lithium salt and the cross-linkable functional group ([G]) of the polymer is more than 0.1 and less than 0.5.

9. The polymer solid electrolyte according to claim 1,
wherein the lithium salt comprises at least one selected from the group consisting of $(CF_3SO_2)_2NLi$(Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

10. The polymer solid electrolyte according to claim 1,
wherein the polymer solid electrolyte is in a form of a free-standing film or a coating layer.

11. The polymer solid electrolyte according to claim 1,
wherein an ionic conductivity of the polymer solid electrolyte is $1.0 \times 10^{-4}$ S/cm or more.

12. A method for preparing a polymer solid electrolyte, comprising the steps of:

(S1) preparing a solution for forming a polymer solid electrolyte by adding a lithium salt to a solution which includes a polymer including a cross-linkable functional group and a first solvent;
(S2) forming a coating film by applying the solution for forming the polymer solid electrolyte on a substrate;
(S3) freezing and thawing the coating film to form a cross-linked structure of the polymer including the cross-linkable functional group, thereby preparing a first polymer solid electrolyte, wherein the cross-linked structure of the polymer comprises the lithium salt and the first solvent; and
(S4) exchanging the first solvent in the first polymer solid electrolyte with a second solvent to prepare a second polymer solid electrolyte.

13. The method for preparing a polymer solid electrolyte according to claim 12,
wherein:

the polymer solid electrolyte has a cross-linked structure,

the cross-linked structure comprises (a) a cross-linkage between cross-linkable functional groups, (b) a cross-linkage between the cross-linkable functional group and the first solvent, and (c) a linkage between the cross-linkable functional group and the lithium salt,

the cross-linkage (a) between cross-linkable functional groups comprises a hydrogen bond,

the cross-linkage (b) between the cross-linkable functional group and the first solvent comprises a hydrogen bond, and

the linkage (c) between the cross-linkable functional group and the lithium salt comprises a linkage by Lewis acid-base interaction.

14. The method for preparing a polymer solid electrolyte according to claim 12, wherein the freezing is performed at -30 °C to -10 °C.

15. The method for preparing a polymer solid electrolyte according to claim 12, wherein the thawing is performed at 15 °C to 35 °C.

16. The method for preparing a polymer solid electrolyte according to claim 12,
wherein the step of exchanging solvent (S4) is performed by drying the first solvent included in the first polymer solid electrolyte at a predetermined temperature and then immersing it in the second solvent to exchange the first solvent with the second solvent.

17. An all-solid-state battery, comprising:
the polymer solid electrolyte of claim 1.

| | INTERNATIONAL SEARCH REPORT | International application No. |
|---|---|---|
| | | **PCT/KR2023/007472** |

**A.      CLASSIFICATION OF SUBJECT MATTER**

**H01M 10/0565**(2010.01)i; **C08J 5/22**(2006.01)i; **H01M 10/052**(2010.01)i

According to International Patent Classification (IPC) or to both national classification and IPC

**B.      FIELDS SEARCHED**

Minimum documentation searched (classification system followed by classification symbols)

H01M 10/0565(2010.01); C08G 64/02(2006.01); C08J 3/075(2006.01); C08J 3/24(2006.01); H01B 1/06(2006.01); H01M 10/052(2010.01); H01M 10/058(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 고분자 전해질 (solid polymer electrolyte, SPEs), 가교 (crosslinking), 냉동 (freezing), 해동 (thawing), 고분자 (polymer), 이온전도도 (ionic conductivity)

**C.      DOCUMENTS CONSIDERED TO BE RELEVANT**

| Category* | Citation of document, with indication, where appropriate, of the relevant passages | Relevant to claim No. |
|---|---|---|
| A | CN 111668539 A (NORTHWESTERN UNIVERSITY) 15 September 2020 (2020-09-15)<br>    See abstract; paragraph [0004]; and claims 1-8. | 1-17 |
| A | JP 08-217868 A (SONY CORP.) 27 August 1996 (1996-08-27)<br>    See entire document. | 1-17 |
| A | CN 113150314 A (SHANGHAI UNIVERSITY OF ENGINEERING SCIENCE) 23 July 2021 (2021-07-23)<br>    See entire document. | 1-17 |
| A | JP 2013-058365 A (KANSAI UNIV.) 28 March 2013 (2013-03-28)<br>    See entire document. | 1-17 |
| A | KR 10-2020-0033675 A (LG CHEM, LTD.) 30 March 2020 (2020-03-30)<br>    See entire document. | 1-17 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 September 2023** | **05 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
| --- |
| **PCT/KR2023/007472** |

| Patent document cited in search report | | | Publication date (day/month/year) | Patent family member(s) | | | Publication date (day/month/year) |
| --- | --- | --- | --- | --- | --- | --- | --- |
| CN | 111668539 | A | 15 September 2020 | CN | 111668539 | B | 23 September 2022 |
| JP | 08-217868 | A | 27 August 1996 | JP | 3384173 | B2 | 10 March 2003 |
| CN | 113150314 | A | 23 July 2021 | | None | | |
| JP | 2013-058365 | A | 28 March 2013 | JP | 5994966 | B2 | 21 September 2016 |
| KR | 10-2020-0033675 | A | 30 March 2020 | CN | 111837286 | A | 27 October 2020 |
| | | | | EP | 3761433 | A1 | 06 January 2021 |
| | | | | EP | 3761433 | A4 | 23 June 2021 |
| | | | | JP | 2021-518977 | A | 05 August 2021 |
| | | | | JP | 2022-186703 | A | 15 December 2022 |
| | | | | JP | 7199447 | B2 | 05 January 2023 |
| | | | | KR | 10-2510293 | B1 | 14 March 2023 |
| | | | | US | 2021-0005930 | A1 | 07 January 2021 |
| | | | | WO | 2020-060292 | A1 | 26 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220066984

- KR 1020230070168